# EUROPÄISCHE PATENTSCHRIFT

(11) **EP 2 104 841 B1**
(45) Veröffentlichungstag und Bekanntmachung des Hinweises auf die Patenterteilung: **09.01.2013**
(21) Anmeldenummer: 07819635.9
(22) Anmeldetag: 07.11.2007
(51) Int. Cl.: G01G 23/00, G01G 23/10

(54) **ELEKTRONISCHE WAAGE MIT EINEM NEIGUNGSMESSER UND ZUGEHÖRIGES VERFAHREN ZUR SIGNALAUSWERTUNG**
ELECTRONIC SCALES COMPRISING AN INCLINOMETER AND CORRESPONDING SIGNAL EVALUATION METHOD
BALANCE ÉLECTRONIQUE MUNIE D'UN INCLINOMÈTRE ET PROCÉDÉ ASSOCIÉ POUR ÉVALUER DES SIGNAUX

(30) Priorität: 15.12.2006 DE 102006059261
(43) Veröffentlichungstag der Anmeldung: 30.09.2009
(73) Patentinhaber: Sartorius Weighing Technology GmbH, 37075 Göttingen (DE)
(72) Erfinder: FREYDANK, Gerd, 37081 Göttingen (DE); GRAF, Winfried, 37127 Niemetal (DE); OLDENDORF, Christian, 37077 Göttingen (DE)
(86) Internationale Anmeldenummer: PCT/EP2007/009619
(87) Internationale Veröffentlichungsnummer: WO 2008/071270

(56) Entgegenhaltungen:
- WO-A-90/05285
- US-A- 3 234 372
- US-A- 3 322 222
- US-A- 4 258 811

## Beschreibung

**Die Erfindung bezieht sich auf eine elektronische Waage mit einem Messwertaufnehmer, mit einer digitalen Signalverarbeitungseinheit, mit einer Digitalanzeige und mit einem Neigungsmesser, wobei der Neigungsmesser aus der Differenz von mindestens zwei Signalen ein Signal für die Schrägstellung der Waage herleitet.**

**Waagen dieser Art sind allgemein bekannt und z. B. in der** DE 32 34 372 C2 **beschrieben. Das elektrische Signal des Neigungsmessers dient dabei dazu, die Fehler der Waage bei Schrägstellung aufgrund des Cosinus-Effektes digital zu korrigieren. Dadurch muss die Waage nicht mehr mittels Stellfüßen in die exakte horizontale Lage gebracht werden.**

**Diese Waagen haben sich in der Praxis jedoch nicht durchgesetzt, da der Aufwand für den Neigungsmesser in Relation zum Nutzen zu groß erschien.**

**Aufgabe der Erfindung ist es daher, eine Waage der eingangs genannten Art so weiterzubilden, dass der Neigungsmesser einen zusätzlichen Nutzen für die Signalverarbeitung der Waage liefert.**

**Erfindungsgemäß wird dies dadurch erreicht, dass zusätzliche Schaltungsmittel oder Programmteile in der digitalen Signalverarbeitungseinheit vorhanden sind, die die Summe der mindestens zwei Signale des Neigungsmessers bilden und die mittels dieses Summensignals das durch Erschütterungen verfälschte Signal des Messwertaufnehmers korrigieren.**

Viele der oben angegebenen Neigungsmesser sind nämlich in der Lage, neben der Neigung auch die vertikale Beschleunigung (Fallbeschleunigung) zu messen. Wird **z. B. eine Libelle als Neigungsmesser eingesetzt, bei der die Lage der Gasblase optisch oder elektrisch ausgelesen wird, so führt eine Schrägstellung der Waage in bekannter Weise zu einer Auslenkung der Gasblase und damit zu einem Differenzsignal an den optischen Empfängern bzw. den Elektroden der Libelle. Außerdem aber verändert die Gasblase in Abhängigkeit von der einwirkenden Fallbeschleunigung ihren Durchmesser. Bei großer Fallbeschleunigung wird die Gasblase dünn und hat einen größeren Durchmesser, bei geringerer Fallbeschleunigung verändert sich die Gasblase aufgrund der Oberflächenspannung mehr in Richtung Kugelgestalt, ihr Durchmesser ist kleiner. Bei Änderungen der Fallbeschleunigung - also bei vertikalen Erschütterungen - ändert sich also synchron der Durchmesser der Gasblase und aus der Änderung des Durchmessersignals kann auf die Größe und die Phasenlage der Erschütterungen geschlossen werden. Das Durchmessersignal ergibt sich dabei aus der Summe der Signale an den optischen Empfängern bzw. an den Elektroden der Libelle. - Dadurch kann die digitale Signalverarbeitungseinheit zum einen aus dem Signal für die Auslenkung (dem Differenzsignal) die bekannte Korrektur der Schrägstellungseinflüsse auf das Wägeergebnis durchführen und zum anderen aufgrund des Durchmessersignals (dem Summensignal) eine Korrektur der Erschütterungseinflüsse.**

**Eine andere Art von Neigungsmesser besteht z. B. aus zwei, unter ca. 45 Grad gegen die Horizontale geneigten Beschleunigungsaufnehmern. Bei horizontaler Ausrichtung der Waage sind die Signale der beiden Beschleunigungsaufnehmer gleich, das Differenzsignal also null. Bei Schrägstellung ergibt sich in bekannter Weise ein von der Schrägstellung abhängiges Differenzsignal. Aus der Summe der Signale der beiden Beschleunigungsaufnehmer ergibt sich zusätzlich ein Signal, das proportional zur Fallbeschleunigung ist.**

**Auch ein Neigungsmesser, der aus einem biegeelastisch aufgehängten Pendel besteht, bei dem die seitliche Auslenkung durch Dehnungsmessstreifen gemessen wird, kann in entsprechender Weise genutzt werden: Das Differenzsignal der beiden Dehnungsmessstreifen an der Pendelaufhängung gibt das Schrägstellungssignal und das Summensignal ist proportional zur momentanen Fallbeschleunigung.**

**Die Erfindung wird im Folgenden anhand der schematischen Zeichnungen erläutert. Dabei zeigt:**
- **Figur 1**: **das Schnittbild der wesentlichen Teile einer Waage mit einer Libelle mit optischer Lageabtastung als Neigungsmesser,**
- **Figur 2**: **die Form der Gasblase des Neigungsmessers aus** **Figur 1** **bei geringer Fallbeschleunigung,**
- **Figur 3**: **die Form der Gasblase des Neigungssensors aus** **Figur 1** **bei größerer Fallbeschleunigung,**
- **Figur 4**: **eine graphische Darstellung der Korrektur von Störungen,**
- **Figur 5**: **eine mögliche Schaltung zur analogen Messung der Auslenkung und des Durchmessers der Gasblase,**
- **Figur 6**: **die Anordnung der lichtempfindlichen Elemente des Neigungsmesser aus** **Figur 1****,**
- **Figur 7**: **das Schnittbild der wesentlichen Teile einer Waage mit zwei Beschleunigungsaufnehmern als Neigungsmesser und**
- **Figur 8**: **das Schnittbild der wesentlichen Teile einer Waage mit einem Pendel als Neigungsmesser.**

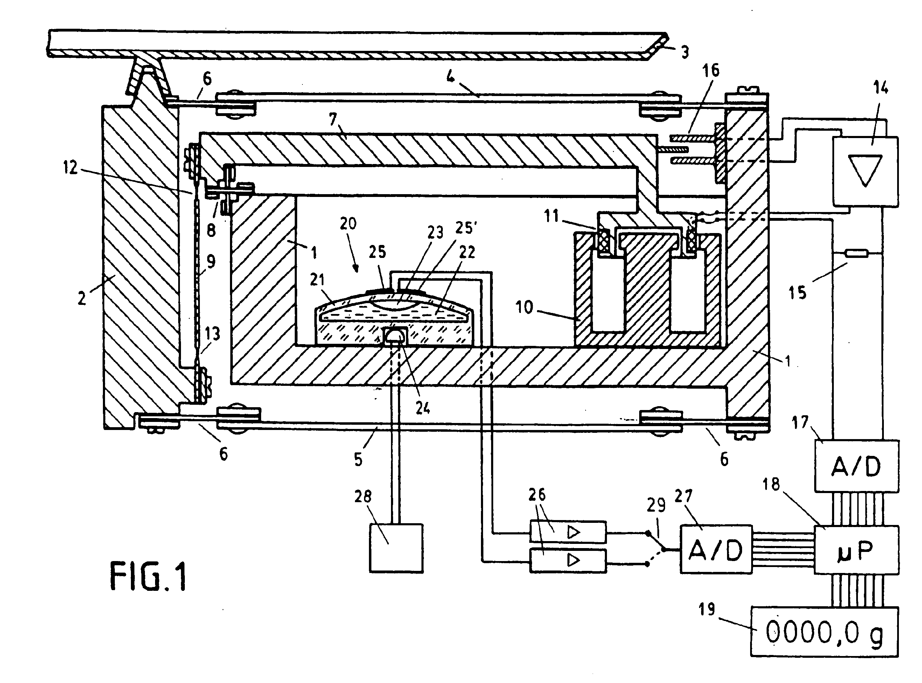

**Die elektronische Waage in** **Figur 1** **besteht aus einem gehäusefesten Stützteil 1, an dem über zwei Lenker 4 und 5 mit den Gelenkstellen 6 ein Lastaufnehmer 2 in senkrechter Richtung beweglich befestigt ist. Der Lastaufnehmer trägt in seinem oberen Teil die Lastschale 3 zur Aufnahme des Wägegutes und überträgt die der Masse des Wägegutes entsprechende Kraft über ein Koppelelement 9 mit den Dünnstellen 12 und 13 auf den kürzeren Hebelarm eines Übersetzungshebels 7. Der Übersetzungshebel 7 ist durch ein Kreuzfedergelenk 8 am Stützteil 1 gelagert. Am längeren Hebelarm des Übersetzungshebels 7 greift die Kompensationskraft an, die durch eine stromdurchflossene Spule 11 im Luftspalt eines Permanentmagnetsystems 10 erzeugt wird. Die Größe des Kompensationsstromes wird in bekannter Weise durch einen Lagensensor 16 und einen Regelverstärker 14 so geregelt, dass Gleichgewicht zwischen dem Gewicht des Wägegutes und der elektromagnetischen Kompensationskraft herrscht. Der Kompensationsstrom erzeugt an einem Messwiderstand 15 eine Messspannung, die einem Analog / Digital-Wandler 17 zugeführt wird. Das digitalisierte Ergebnis wird von einer digitalen Signalverarbeitungseinheit 18 übernommen und in der Digitalanzeige 19 digital angezeigt.**

**Waagen dieser Art sind in ihrem Aufbau und ihrer Funktion allgemein bekannt, sodass sie im Vorstehenden nur ganz kurz und knapp erläutert wurden.**

**Weiter ist eine elektrische Libelle als Neigungsmesser 20 in die Waage eingebaut. Die Libelle besteht aus einem durchsichtigen Behälter 21, der teilweise mit einer Flüssigkeit 22 gefüllt ist, sodass sich eine Gasblase 23 an der höchsten Stelle des Behälters 21 bildet. Wegen der Krümmung der oberen Begrenzungsfläche des Behälters 21 ist die Lage dieser Gasblase 23 abhängig von der Schrägstellung der Waage; in der Figur ist diese Krümmung aus Gründen der Deutlichkeit übertrieben stark gezeichnet. Unterhalb des Behälters 21 ist mittig eine Leuchtdiode 24 angeordnet, die ihre emittierte Strahlung senkrecht nach oben durch die untere Behälterwand, die Flüssigkeit 22, die Gasblase 23 und die obere Behälterwand sendet. Dort wird die nicht absorbierte Strahlung von zwei lichtempfindlichen Elementen - z. B. zwei Fotodioden - 25 und 25' registriert. Die Flüssigkeit 22 ist nun so ausgewählt bzw. so angefärbt, dass sie die Strahlung der Leuchtdiode teilweise absorbiert, sodass die an den lichtempfindlichen Elementen 25 und 25' ankommende Strahlungsmenge stark von der durchstrahlten Flüssigkeitsdicke - und damit von der Lage der Gasblase 23 - abhängt. Die Leuchtdiode 24 wird von einer Stromversorgungseinheit 28 mit einem konstanten Strom versorgt. Das Ausgangssignal der lichtempfindlichen Elemente 25 und 25' wird in zwei Verstärkern 26 verstärkt und über einen Multiplexer 29 einem Analog / Digital-Wandler 27 zugeführt und dort digitalisiert. Die digitale Signalverarbeitungseinheit 18 kann dann aus der Differenz der Signale und der bekannten Kennlinie der Libelle die Schrägstellung der Waage berechnen und den Messwert des Wägesystems, der vom Analog/Digital-Wandler 17 geliefert wird, entsprechend korrigieren.**

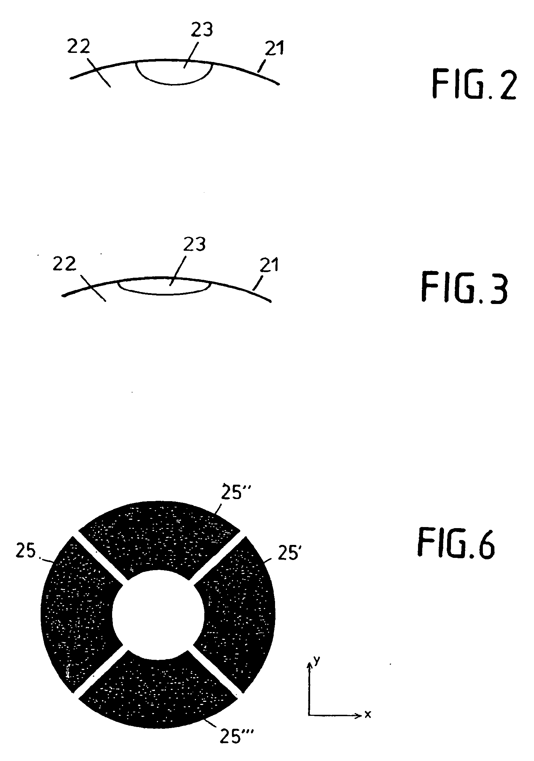

**Der Einfluss der Fallbeschleunigung auf die Form der Gasblase ist in den** **Figuren 2 und 3** **gezeigt. Bei geringer Fallbeschleunigung überwiegt der Einfluss der Oberflächenspannung und die Form der Gasblase nähert sich einer Kugel, wie es in** **Figur 2** **gezeigt ist. Bei hoher Fallbeschleunigung ist der Einfluss der Fallbeschleunigung größer und drückt die Gasblase in eine flachere Form, wie es in** **Figur 3** **gezeigt ist. Bei einer vertikalen Erschütterung der Waage wechseln höhere und niedrigere Fallbeschleunigungen synchron zur Erschütterung ab. Dementsprechend wechselt der Durchmesser der Gasblase synchron zur Erschütterung. Die digitale Signalverarbeitungseinheit 18 kann den Durchmesser dabei aus dem Summensignal der beiden lichtempfindlichen Elemente 25 und 25' errechnen. - Voraussetzung dafür ist natürlich, dass der Multiplexer 29 und der Analog/Digital-Wandler 27 so schnell sind, dass sie Größe und Phasenlage der Erschütterung richtig wiedergeben. Da die hauptsächlichen Erschütterungen im Frequenzbereich von ca. 0,1 Hz bis 10 Hz liegen, ist dies jedoch kein Problem. Erschütterungen mit höheren Frequenzen von z. B. über 50 Hz lassen sich gut durch übliche digitale Filter unterdrücken, sodass in diesem Frequenzbereich keine Notwendigkeit für eine zusätzliche Unterdrückung von Störsignalen besteht.**

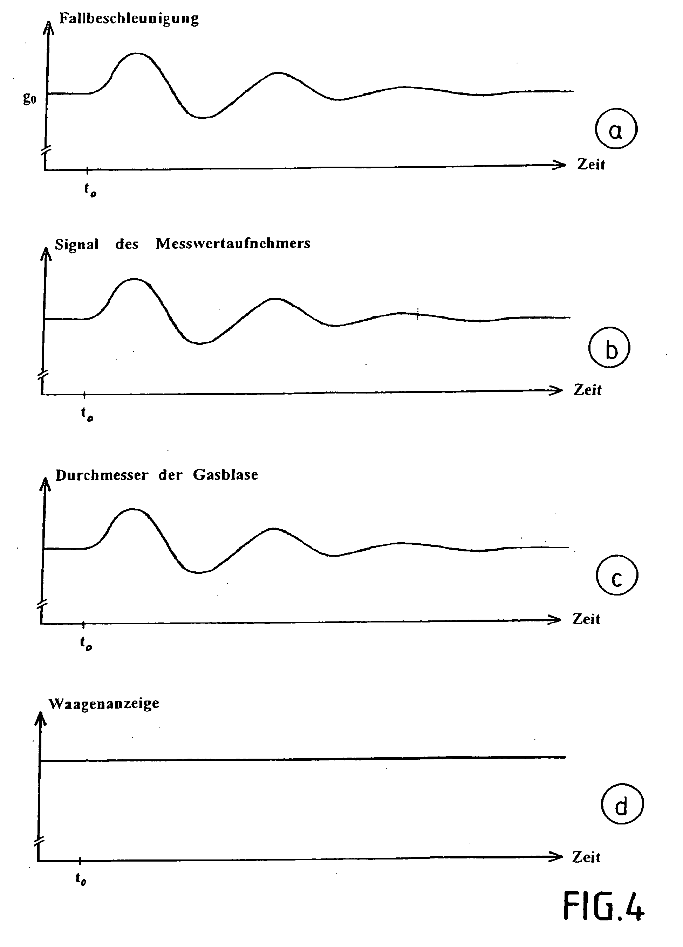

**In** **Figur 4** **ist beispielhaft die Korrektur einer zum Zeitpunkt t₀ einsetzenden Störung gezeigt. Im Teilbild a ist die Störung gezeigt, wie sie von außen auf die Waage einwirkt: die normale Fallbeschleunigung g₀ wird ab dem Zeitpunkt t₀ von einer Störbeschleunigung überlagert, die mit einer erhöhten Fallbeschleunigung beginnt und nach einigen Perioden relativ schnell abklingt. Diese Störung wirkt sich proportional im Signal des Messwertaufnehmers auf, wie es zum Beispiel am Messwiderstand 15 abgegriffen werden kann und wie es im Teilbild b dargestellt ist. Die Störbeschleunigung wirkt sich in gleicher Weise auf den Durchmesser der Gasblase aus, wie es im Teilbild c dargestellt ist. Die digitale Signalverarbeitungseinheit 18 kann dann durch entsprechende Korrekturalgorithmen das Signal des Messwertaufnehmers korrigieren, sodass sich die Störung in der Digitalanzeige 19 nicht bzw. stark verringert auswirkt (Teilbild d).**

**Diese Korrekturalgorithmen kann jeder Fachmann leicht entwerfen und dabei zum Beispiel auch berücksichtigen, dass bei größerer Last auf der Waagschale 3 auch eine größere Korrektur notwendig ist.**

**Im Vorstehenden ist davon ausgegangen worden, dass das momentane Summensignal von der Libelle direkt zur Korrektur des momentanen Signals des Messwertaufnehmers benutzt wird. Dies setzt natürlich voraus, dass das Frequenz- und Phasenverhalten des Durchmessersignals im Frequenzbereich der Korrektur mit dem Frequenz- und Phasenverhalten des Messwertaufnehmers übereinstimmt. Diese Übereinstimmung kann z. B. durch die richtige Wahl der Viskosität der Flüssigkeit 22 der Libelle erreicht werden, aber auch durch eine analoge oder digitale Filterung des Durchmessersignals. Genauso kann auch das Signal des Messwertaufnehmers in bekannter Weise gefiltert werden, ehe die beschriebene Erschütterungskorrektur durchgeführt wird.**

**Alternativ sind jedoch auch einfachere Korrekturstrategien möglich: z. B. kann die digitale Signalverarbeitungseinheit 18 einfach die mittlere Amplitude der Änderungen des Summensignals - und damit also die mittlere Amplitude der Störbeschleunigung - bestimmen und aufgrund dieses Signals mindestens eine Filterstufe in der Filterung des Signals des Messwertaufnehmers verändern: Bei kleinen Störbeschleunigungen wird das Signal des Messwertaufnehmers nur wenig gefiltert, bei großen Störbeschleunigungen wird die Filterzeitkonstante erhöht und so trotz der schlechteren Aufstellbedingungen eine stabile Anzeige erreicht.**

**In einer anderen vorteilhaften Ausgestaltung wird nur die Frequenz der Änderung des Summensignals bestimmt. Dann wird z. B. durch Veränderung der Abtastfrequenz des Analog- / Digital-Wandlers 17 dafür gesorgt, dass die Abtastfrequenz ein Vielfaches der Störfrequenz ist, um so diese Störfrequenz besonders wirkungsvoll zu unterdrücken. Dasselbe ist natürlich auch durch eine entsprechende Anpassung der digitalen Filterung in der digitalen Signalverarbeitungseinheit 18 möglich. Diese Alternative ist natürlich besonders dann vorteilhaft, wenn die Störbeschleunigungen nicht kurzfristiger Art sind - wie in** **Figur 4** **angenommen - , sondern längerfristig auf die Waage einwirken. Ein Beispiel dafür sind Gebäudeschwingungen aufgrund von schlecht ausgewuchteten rotierenden Maschinen.**

**Die bisher beschriebenen Varianten der Erschütterungskorrektur basieren alle auf einer Korrektur des Signals vom Messwertaufnehmer in der digitalen Signalverarbeitungseinheit 18. Es ist jedoch auch möglich, z. B. in den Füßen der Waage Aktoren vorzusehen, die die von der Libelle gemessene Schrägstellung und die von der Libelle gemessenen Erschütterungen mechanisch korrigieren. Für die Schrägstellung der Waage ist dies bekannt und z. B. mit motorisch verstellbaren Stellfüßen realisiert. In gleicher Weise ist dies auch für die Störbeschleunigungen möglich, wenn man Aktoren benutzt, die eine Verstellung im geforderten Frequenzbereich ermöglichen. Z. B. Piezo-Aktoren sind dafür geeignet. Diese Aktoren werden dann z. B. in einem Regelkreis so angesteuert, dass das Erschütterungssignal an der Libelle auf (nahezu) null geregelt wird.**

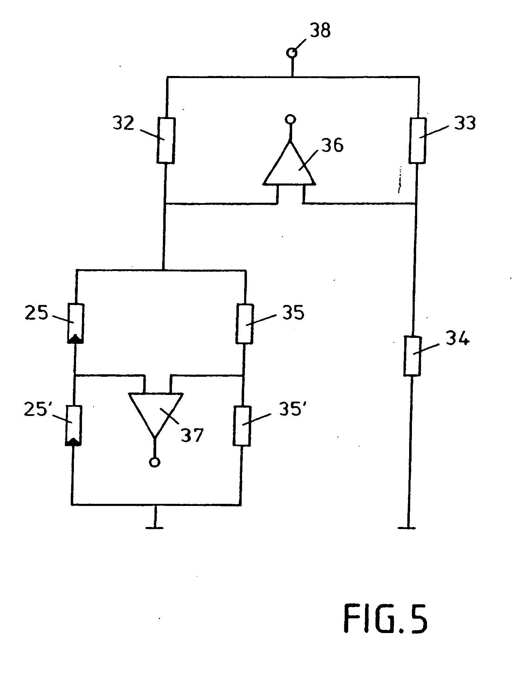

**Für die Auswertung der Signale des Neigungsmessers ist in** **Figur 1** **die Digitalisierung der Signale der lichtempfindlichen Elemente 25 und 25' in einem Analog / Digital-Wandler 27 vorgesehen. Es sind jedoch auch Schaltungen möglich, die analogelektrisch das Differenzsignal und das Summensignal zur Verfügung stellen. Eine solche Schaltung ist in** **Figur 5** **dargestellt. Die beiden lichtempfindlichen Elemente 25 und 25' sind zusammen mit den beiden gleich großen Widerständen 35 und 35' zu einer ersten Wheatstoneschen Brücke verschaltet. Am Ausgang des Brückenverstärkers 37 kann dann das Differenzsignal abgegriffen werden. Die gesamte erste Brücke bildet wiederum zusammen mit den drei weiteren Brückenwiderständen 32, 33 und 34 eine zweite Wheatstonesche Brücke, an deren Brückendiagonalen über den Brückenverstärker 36 das Summensignal abgegriffen werden kann. Am Anschluss 38 wird die Versorgungsspannung für die Wheatstoneschen Brücken angelegt. - Ändern sich die Signale der lichtempfindlichen Elemente 25 und 25' gegensinnig, so ändert sich der Abgleich der zweiten Wheatstoneschen Brücke nicht, die zweite Wheatstonesche Brücke wird also vom Differenzsignal der lichtempfindlichen Elemente 25 und 25' nicht beeinflusst. In entsprechender Weise hat eine gleichsinnige Änderung der Signale der lichtempfindlichen Elemente 25 und 25' keinen Einfluss auf das Ausgangssignal des Brückenverstärkers 37. Die Ausgänge der Brückenverstärker 36 und 37 liefern also jeweils nur das Summensignal bzw. das Differenzsignal.**

**Bisher ist aus Gründen der Übersichtlichkeit nur die Abtastung der Schrägstellung der Waage in einer Richtung gezeigt und beschrieben. Für die Abtastung in beiden Richtungen sind im Neigungssensor 20 vier lichtempfindliche Elemente 25, 25', 25" und 25'" vorhanden, deren Form und Anordnung in** **Figur 6** **dargestellt ist. Die lichtempfindlichen Elemente 25 und 25' ergeben mit ihrem Differenzsignal die Schrägstellung in x-Richtung, die lichtempfindlichen Elemente 25" und 25'" entsprechend in y-Richtung. Den lichtempfindlichen Elementen 25" und 25'" ist ebenfalls je ein Verstärker nachgeschaltet und der Multiplexer 29 in** **Figur 1** **weist zwei zusätzliche Eingänge auf (nicht gezeichnet). - Diese Geometrie mit vier lichtempfindlichen Elementen 25...25"' ist für die Berechnung und die Erläuterung am einfachsten, da die Auslenkung in x- und y-Richtung direkt aus den Differenzen der Signale der gegenüberliegenden lichtempfindlichen Elemente erhalten wird. Selbstverständlich ist es mit geringfügig höherem mathematischem Aufwand auch möglich, aus drei lichtempfindlichen Elementen, die z. B. in den Ecken eines gleichseitigen Dreiecks angeordnet sind, die Auslenkung in x- und y-Richtung zu bestimmen. - Das Signal für die vertikale Fallbeschleunigung wird in allen Fällen aus der Summe der Signale der einzelnen Elektroden hergeleitet.**

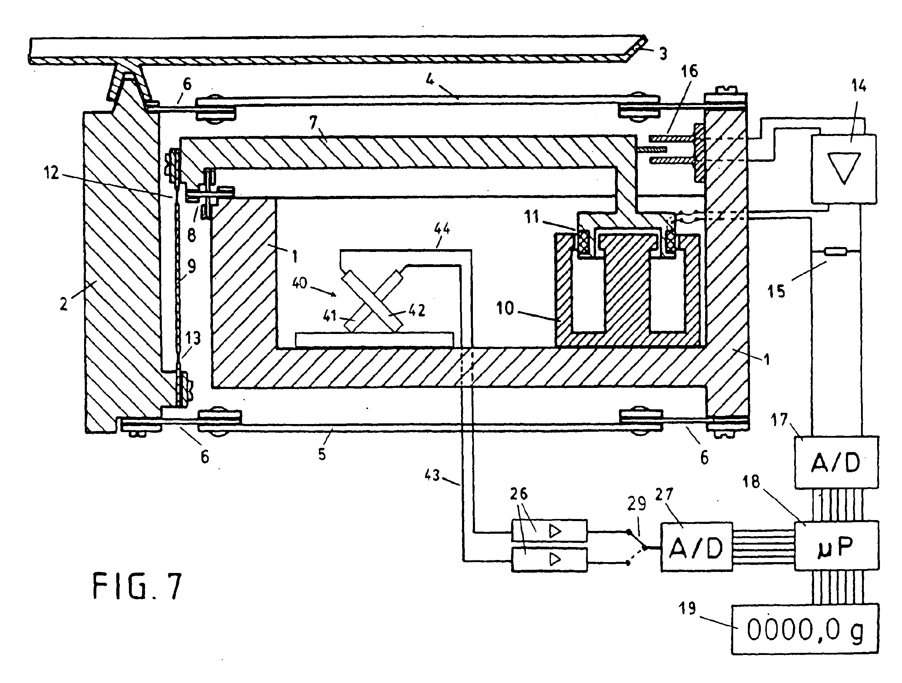

**In** **Figur 7** **ist eine zweite Ausgestaltung der Waage gezeigt. Als Neigungsmesser 40 ist in diesem Fall eine Anordnung von zwei Beschleunigungsaufnehmern 41 und 42 vorhanden, die unter 45 Grad gegen die Horizontale geneigt in der Waage eingebaut sind. Die Beschleunigungsaufnehmer sind in** **Figur 7** **nur schematisch eingezeichnet. Es kann sich z. B. um mikromechanisch hergestellte Bauelemente handeln, wie sie z. B. aus dem Automobilbau als Beschleunigungssensor / Crashsensor bekannt sind. Die Spannungsversorgung der Beschleunigungsaufnehmer 41 und 42 ist in** **Figur 7** **aus Gründen der Übersichtlichkeit nicht eingezeichnet. Die Ausgangssignale der Beschleunigungsaufnehmer 41 und 42 werden über die Signalleitungen 43 und 44 Verstärkern 26 zugeführt und anschließend vom Analog / Digital-Wandler 27 digitalisiert. Aus der Differenz der beiden Signale kann dann in bekannter Weise die Schrägstellung der Waage bestimmt werden und aus der Summe der beiden Signale kann die Größe der Fallbeschleunigung / der Erschütterungen hergeleitet werden, wie es im Vorstehenden schon beschrieben wurde. - Die nicht erläuterten Teile der Waage sind identisch und gleich bezeichnet mit den entsprechenden Teilen der Waage aus** **Figur 1****.**

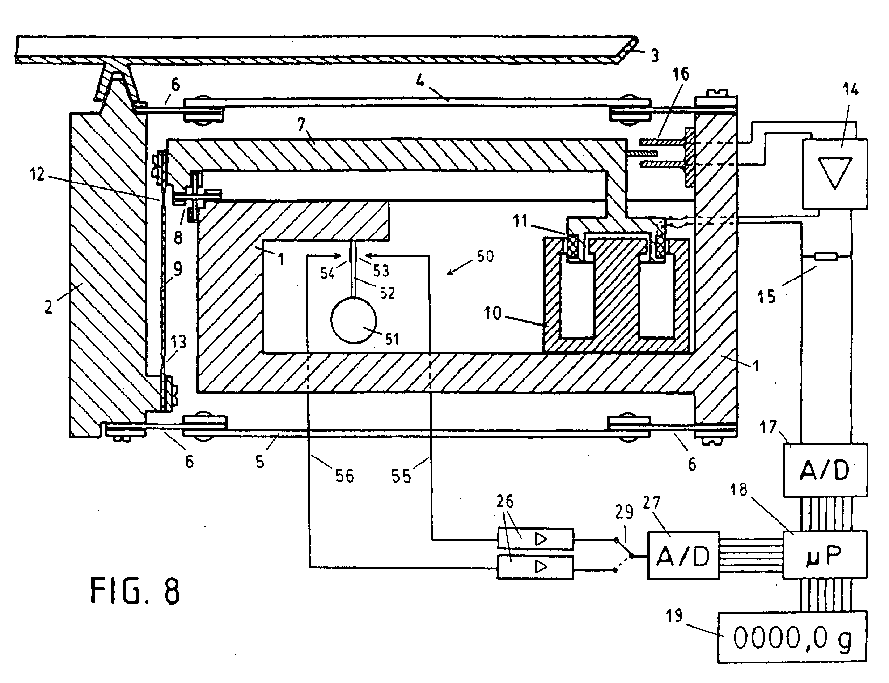

**In** **Figur 8** **ist eine dritte Ausgestaltung der Waage gezeigt. In dieser Ausgestaltung ist als Neigungsmesser 50 ein Pendel 51 in die Waage eingebaut, wobei das Pendel 51 über ein biegeelastisches Element 52 am Systemträger 1 der Waage aufgehängt ist. Auf dem biegeelastischen Element 52 sind zwei Dehnungsmessstreifen 53 und 54 appliziert, deren Signal über die (nur schematisch angedeuteten) Zuleitungen 55 und 56 den Verstärkern 26 und dem Analog / Digital-Wandler 27 zugeführt werden. Bei Schrägstellung der Waage werden die beiden Dehnungsmessstreifen 53 und 54 verschieden gedehnt bzw. gestaucht, es ergibt sich also ein Differenzsignal. Durch das Gewicht des Pendels 51 werden die beiden Dehnungsmessstreifen 53 und 54 gleichsinnig gedehnt, wobei die Dehnung proportional zur Fallbeschleunigung ist. Das Summensignal der beiden Dehnungsmessstreifen ist also proportional zur momentanen Fallbeschleunigung. - Die restlichen Teile der Waage in** **Figur 8** **sind wieder identisch mit den gleich bezeichneten Teilen der Waage aus** **Figur 1****.**

**Selbstverständlich können die Differenz- und Summensignale der Dehnungsmessstreifen 53 und 54 auch analog-elektrisch, wie anhand von** **Figur 5** **beschrieben, ausgewertet werden.**

**Bei den Waagen in** **Figur 7** **und** **8** **wurde der Neigungsmesser 40 bzw. 50 wieder nur anhand der Neigungsmessung in einer Richtung erläutert, die Erweiterung auf beide Richtungen kann jeder Fachmann leicht durchführen.**

**Bisher ist immer nur von der Korrektur des Erschütterungseinflusses die Rede gewesen, wobei der Schwerpunkt bei Erschütterungen im 1Hz-Bereich lag. Dies ist der praktisch wichtige Fall. Selbstverständlich ist es auch möglich, das Summensignal, das ja proportional zur Fallbeschleunigung ist, zur Korrektur von statischen und quasi-statischen Änderungen der Fallbeschleunigung zu benutzen. Dies setzt allerdings voraus, dass die zeitliche Stabilität des Neigungsmessers und seine Stabilität gegenüber Temperaturschwankungen mindestens so gut ist, wie die Stabilität des eigentlichen Messwertaufnehmers.**

### Bezugszeichenliste:

- **1**: **gehäusefestes Stützteil**
- **2**: **Lastaufnehmer**
- **3**: **Lastschale**
- **4**: **Lenker**
- **5**: **Lenker**
- **6**: **Gelenkstellen**
- **7**: **Übersetzungshebel**
- **8**: **Kreuzfedergelenk**
- **9**: **Koppelelement**
- **10**: **Permanentmagnetsystem**
- **11**: **Spule**
- **12**: **Dünnstelle**
- **13**: **Dünnstelle**
- **14**: **Regelverstärker**
- **15**: **Messwiderstand**
- **16**: **Lagensensor**
- **17**: **Analog/Digital-Wandler**
- **18**: **digitale Signalverarbeitungseinheit**
- **19**: **Digitalanzeige**
- **20**: **Neigungsmesser**
- **21**: **durchsichtiger Behälter**
- **22**: **Flüssigkeit**
- **23**: **Gasblase**
- **24**: **Leuchtdiode**
- **25, 25'**: **lichtempfindliche Elemente**
- **25", 25"'**: **lichtempfindliche Elemente**
- **26**: **Verstärker**
- **27**: **Analog/Digital-Wandler**
- **28**: **Stromversorgungseinheit**
- **29**: **Multiplexer**
- **32**: **Brückenwiderstand**
- **33**: **Brückenwiderstand**
- **34**: **Brückenwiderstand**
- **35, 35'**: **Widerstände**
- **36**: **Brückenverstärker**
- **37**: **Brückenverstärker**
- **38**: **Anschluss für die Versorgungsspannung**
- **40**: **Neigungsmesser**
- **41**: **Beschleunigungsaufnehmer**
- **42**: **Beschleunigungsaufnehmer**
- **43**: **Signalleitung**
- **44**: **Signalleitung**
- **50**: **Neigungsmesser**
- **51**: **Pendel**
- **52**: **biegeelastisches Element**
- **53**: **Dehnungsmessstreifen**
- **54**: **Dehnungsmessstreifen**
- **55**: **Zuleitung**
- **56**: **Zuleitung**

## Patentansprüche

1. **Elektronische Waage mit einem Messwertaufnehmer (1...16), mit einer digitalen Signalverarbeitungseinheit (18), mit einer Digitalanzeige (19) und mit einem Neigungsmesser (20, 40, 50), wobei der Neigungsmesser aus der Differenz von mindestens zwei Signalen ein Signal für die Schrägstellung der Waage herleitet, dadurch gekennzeichnet, dass zusätzliche Schaltungsmittel (32...36) oder Programmteile in der digitalen Signalverarbeitungseinheit (18) vorhanden sind, die die Summe der mindestens zwei Signale des Neigungsmessers bilden und die mittels dieses Summensignals das durch Erschütterungen verfälschte Signal des Messwertaufnehmers (1...16) korrigieren.**

2. **Elektronische Waage nach Anspruch 1, dadurch gekennzeichnet, dass der Neigungsmesser (20) aus einer Libelle mit optischer oder elektrischer Detektion der Auslenkung der Gasblase (23) besteht und dass zusätzlich der Durchmesser der Gasblase (23) detektierbar ist.**

3. **Elektronische Waage nach Anspruch 1, dadurch gekennzeichnet, dass der Neigungsmesser (40) aus mindestens zwei, unter einem Winkel von ca. 45 Grad gegen die Horizontale geneigt angeordneten Beschleunigungsaufnehmern (41, 42) besteht.**

4. **Elektronische Waage nach Anspruch 1, dadurch gekennzeichnet, dass der Neigungsmesser (50) aus einem biegeelastisch aufgehängten Pendel (51), dessen seitliche Auslenkung gemessen wird, besteht.**

5. **Elektronische Waage nach einem der Ansprüche 1 bis 4, dadurch gekennzeichnet, dass die Ausgangssignale des Neigungsmessers (20, 40, 50) einem Analog / Digital-Wandler (27) zugeführt werden und dass in der digitalen Signalverarbeitungseinheit (18) Programmteile zur digitalen Bildung der Differenz und der Summe dieser Ausgangssignale vorhanden sind.**

6. **Verfahren zur Auswertung der Signale eines Neigungsmessers (20, 40, 50) in einer Waage nach dem Oberbegriff von Anspruch 1, dadurch gekennzeichnet, dass in der digitalen Signalverarbeitungseinheit (18) sowohl die Differenz als auch die Summe der Ausgangssignale des Neigungsmessers (20, 40, 50) berechnet werden.**

7. **Verfahren nach Anspruch 6, dadurch gekennzeichnet, dass das Summensignal zur Korrektur des Einflusses von Erschütterungen auf das Signal des Messwertaufnehmers (1...16) benutzt wird.**

8. **Verfahren nach Anspruch 7, dadurch gekennzeichnet, dass das momentane Signal des Messwertaufnehmers (1...16) in Abhängigkeit vom momentanen Summensignal digital in der digitalen Signalverarbeitungseinheit (18) korrigiert wird.**

9. **Verfahren nach Anspruch 7, dadurch gekennzeichnet, dass das Summensignal zur Ansteuerung von Aktoren, die in den Füßen der elektronischen Waage angeordnet sind, benutzt wird und dass die Aktoren den auf die Waage einwirkenden Erschütterungen entgegenwirken.**

10. **Verfahren nach Anspruch 7, dadurch gekennzeichnet, dass in Abhängigkeit von der Amplitude der Schwankungen des Summensignals die Zeitkonstante mindestens eines der in der digitalen Signalverarbeitungseinheit (18) vorhandenen Filter verändert wird.**

11. **Verfahren nach Anspruch 7, dadurch gekennzeichnet, dass in Abhängigkeit von der Frequenz der Schwankungen des Summensignals die Abtastfrequenz des dem Messwertaufnehmer (1...16) nachgeschalteten Analog/Digital-Wandlers (17) verändert wird.**

## Claims

1. Electronic weighing machine with a measured value pick-up (1 ... 16), with a digital signal processing unit (18), with a digital display (19) and with an inclinometer (20, 40, 50), wherein the inclinometer derives a signal for the inclination setting of the weighing machine from the difference of at least two signals, **characterised in that** additional switching means (32 ... 36) or program parts which form the sum of the at least two signals of the inclinometer are present in the digital signal processing unit (18) and which by means of this summation signal correct the signal, which is falsified by vibrations, of the measured value pick-up (1 ... 16).

2. Electronic weighing machine according to claim 1, **characterised in that** the inclinometer (20) consists of a spirit level with optical or electrical detection of the deflection of the gas bubble (23) and that in addition the diameter of the gas bubble is detectable.

3. Electronic weighing machine according to claim 1, **characterised in that** the inclinometer (40) consists of at least two acceleration pick-ups (41, 42) which are arranged to be inclined relative to the horizontal at an angle of approximately 45 degrees.

4. Electronic weighing machine according to claim 1, **characterised in that** the inclinometer (50) consists of a resiliently suspended pendulum (51), the lateral deflection of which is measured.

5. Electronic weighing machine according to any one of claims 1 to 4, **characterised in that** the output signals of the inclinometer (20, 40, 50) are fed to an analog-to-digital converter (27) and that program parts for digital formation of the difference and the sum of these output signals are present in the digital signal processing unit (18).

6. Method of evaluating the signals of an inclinometer (20, 40, 50) in a weighing machine according to the preamble of claim 1, **characterised in that** not only the difference, but also the sum of the output signals of the inclinometer (20, 40, 50) are calculated in the digital signal processing unit (18).

7. Method according to claim 6, **characterised in that** the summation signal is used for correction of the influence of vibrations on the signal of the measured value pick-up (1 ... 16).

8. Method according to claim 7, **characterised in that** the current signal of the measured value pick-up (1 ... 16) is digitally corrected in the digital signal processing unit (18) in dependence on the current summation signal.

9. Method according to claim 7, **characterised in that** the summation signal is used for driving actuators arranged in the feet of the electronic weighing machine and that the actuators counteract the vibrations acting on the weighing machine.

10. Method according to claim 7, **characterised in that** the time constant of at least one of the filters present in the digital signal processing unit (18) is changed in dependence on the amplitude of the fluctuations of the summation signal.

11. Method according to claim 7, **characterised in that** the scanning frequency of the analog-to-digital converter (17) downstream of the measured value pick-up (1 ... 16) is changed in dependence on the frequency of the fluctuations of the summation signal.

## Revendications

1. Balance électronique munie d'un capteur d'informations (1...16) comprenant une unité de traitement de signal numérique (18), comprenant un indicateur numérique (19) et comprenant un inclinomètre (20, 40, 50), l'inclinomètre transmettant un signal pour l'inclinaison de la balance à partir de la différence d'au moins deux signaux, **caractérisée en ce que** des moyens de commutation (32....36) supplémentaires ou des parties de programme dans l'unité de traitement de signal numérique (18) sont présents, moyens qui constituent la somme des au moins deux signaux de l'inclinomètre et qui corrigent au moyen de ce signal de la somme le signal faussé par des chocs du capteur d'information (1....16).

2. Balance électronique selon la revendication 1 **caractérisée en ce que** l'inclinomètre (20) est basé sur un niveau avec une détection optique ou électrique de la déformation d'une bulle de gaz (23) et qu'en outre le diamètre de la bulle de gaz (23) peut être détecté.

3. Balance électronique selon la revendication 1 **caractérisée en ce que** l'inclinomètre (40) est constitué par au moins deux capteurs d'accélération (41, 42) disposés inclinés sous un angle d'environ 45 degrés par rapport à l'horizontale.

4. Balance électronique selon la revendication 1 **caractérisée en ce que** l'inclinomètre (50) est constitué par un pendule (51), suspendu de manière flexible élastique, dont le déploiement latéral est mesuré.

5. Balance électronique selon l'une des revendications de 1 à 4 **caractérisée en ce que** les signaux de sortie de l'inclinomètre (20, 40, 50) sont menés à un convertisseur analogique-numérique (27) et que des parties de programme dans l'unité de traitement numérique (18) sont présentes pour la formation, sous forme numérique, de la différence et de la somme de ces signaux de sortie.

6. Procédé pour l'évaluation des signaux d'un inclinomètre (20, 40, 50) dans une balance selon le terme générique de la revendication 1 **caractérisé en ce que**, dans l'unité de traitement de signal numérique (18), à la fois la différence et également la somme des signaux de sortie de l'inclinomètre (20, 40, 50) sont calculées.

7. Procédé selon la revendication 6 **caractérisé en ce que** le signal de la somme est utilisé pour la correction de l'influence des chocs sur le signal du capteur d'informations (1....16).

8. Procédé selon la revendication 7 **caractérisé en ce que** le signal instantané du capteur d'informations (1....16) est corrigé en fonction du signal de somme instantané numérique dans l'unité de traitement de signal (18) numérique.

9. Procédé selon la revendication 7 **caractérisé en ce que** le signal de somme est utilisé pour la mise en route d'actionneurs qui sont disposés dans les socles de la balance électronique et que les actionneurs contrebalancent les chocs agissant sur la balance.

10. Procédé selon la revendication 7 **caractérisé en ce qu'**en fonction de l'amplitude des variations du signal de somme, la constante de temps d'au moins l'un des filtres présents dans l'unité de traitement de signal (18) numérique est modifiée.

11. Procédé selon la revendication 7 **caractérisé en ce qu'**en fonction de la fréquence des variations du signal de somme, la fréquence d'échantillonnage du convertisseur analogique/numérique (17) agencé après le capteur d'informations (1....16) est modifiée.
